# FASCICULE DE BREVET EUROPEEN

(11) **EP 3 558 725 B1**
(45) Date de publication et mention de la délivrance du brevet: **03.02.2021**
(21) Numéro de dépôt: 17825160.9
(22) Date de dépôt: 13.12.2017
(51) Int. Cl.: B60G 15/06, B60G 17/027

(54) **SYSTÈME DE SUSPENSION ET D'AMORTISSEMENT ADAPTÉ POUR LE RÉGLAGE DE GARDE AU SOL D'UN VÉHICULE AUTOMOBILE**
AUFHÄNGUNGS- UND DÄMPFUNGSSYSTEM ZUR STEUERUNG DER BODENFREIHEIT EINES KRAFTFAHRZEUGS
SUSPENSION AND DAMPING SYSTEM SUITABLE FOR CONTROLLING THE GROUND CLEARANCE OF A MOTOR VEHICLE

(30) Priorité: 21.12.2016 FR 1663046
(43) Date de publication de la demande: 30.10.2019
(73) Titulaire: RENAULT s.a.s., 92100 Boulogne-Billancourt (FR)
(72) Inventeur: ROLLET, Rémi, 91190 Gif-Sur-Yvette (FR); ROGER, Aymeric, 75017 Paris (FR)
(86) Numéro de dépôt international: PCT/EP2017/082533
(87) Numéro de publication internationale: WO 2018/114499

(56) Documents cités:
- EP-A2- 1 864 836
- WO-A1-2006/131343
- JP-A- H10 250 338
- US-A1- 2009 146 385

## Description

La présente invention se rapporte, de manière générale, à un système de suspension et d'amortissement pour véhicule automobile, et plus particulièrement à un système de suspension et d'amortissement adapté pour le réglage de garde au sol.

Un véhicule automobile comporte généralement, au niveau de ses quatre roues, un système de suspension et d'amortissement qui permet d'adoucir les irrégularités de la route empruntée par le véhicule afin d'améliorer le confort du véhicule et d'optimiser sa tenue de route.

Il est connu d'équiper un tel système de suspension et d'amortissement d'un dispositif de correction d'assiette ou réglage de garde au sol afin de pouvoir régler la distance séparant le châssis du sol, au niveau de chacune des roues du véhicule, et ce alors que le véhicule est en service.

Modifier cette distance permet par exemple de changer l'assiette du véhicule afin d'optimiser sa tenue de route en fonction des conditions de marche.

Cela permet aussi de modifier la garde au sol du véhicule, c'est-à-dire la distance séparant le sol de l'ensemble du châssis. Cette dernière fonctionnalité permet, en réduisant la garde au sol, c'est-à-dire en déplaçant le châssis d'une position intermédiaire ou normale vers une position basse, d'optimiser la tenue de route lors d'une conduite rapide du véhicule automobile sur un sol peu accidenté, tandis qu'une garde au sol augmentée, ou position haute, permettra par exemple de progresser sur des terrains accidentés, en milieu rural, ou de franchir des obstacles élevés tels que des trottoirs.

Généralement, un système de suspension et d'amortissement comprend un amortisseur et un ressort disposés sur un même axe. L'amortisseur comprend un corps d'amortisseur dans lequel coulisse une tige de piston. De plus, le ressort est monté entre une coupelle inférieure et une coupelle supérieure. A partir d'une charge de référence du véhicule, on peut définir quatre courses du corps d'amortisseur. Pour que le châssis du véhicule soit positionné au plus près du sol, c'est-à-dire pour qu'il atteigne la position la plus basse autorisée par l'architecture du système, induisant une compression limite du ressort, il faut que le corps d'amortisseur se déplace de la position intermédiaire vers la position basse jusqu'à heurter une butée de suspension. Le parcours du corps d'amortisseur est nommé course au choc.

Lorsque le corps d'amortisseur se déplace sur une distance inverse à la course au choc, son déplacement est appelé course au rebond.

On peut également définir une course d'abaissement lorsque le corps d'amortisseur se déplace de la position intermédiaire jusqu'à une position basse du châssis par rapport au sol, si le système le permet.

Enfin, on peut définir une course de rehaussement lorsque le corps d'amortisseur se déplace de la position intermédiaire jusqu'à une position haute.

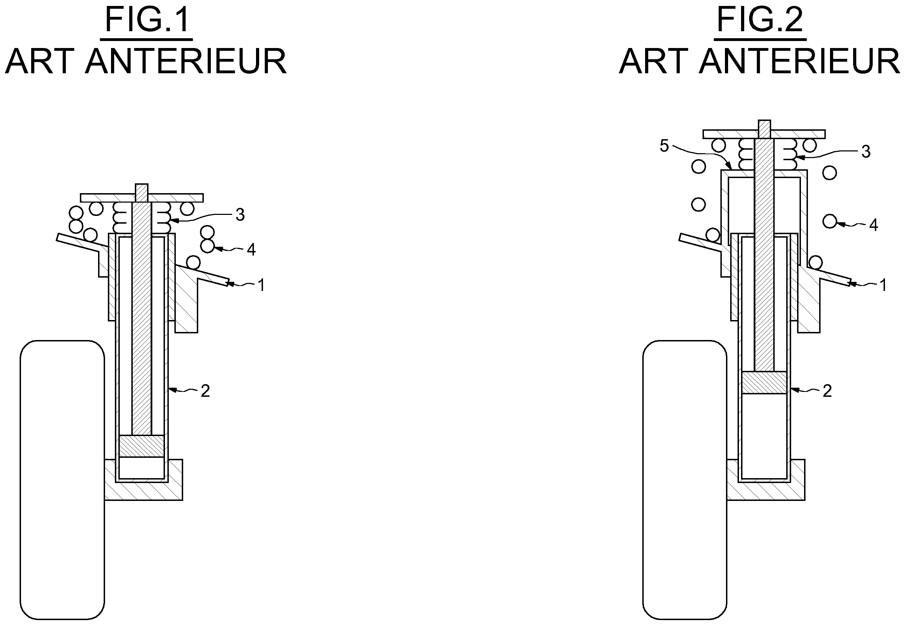

Lors de la course au choc dans un système de suspension et d'amortissement classique, tel qu'illustré à la figure 1, la coupelle inférieure 1 se déplace en direction du châssis jusqu'à ce que la partie supérieure du corps d'amortisseur 2 atteigne la butée 3 de suspension. Lorsque la coupelle 1 est en position haute, c'est-à-dire lorsqu'elle a effectué sa course de rehaussement, la butée de choc s'est éloignée du corps, et le ressort 4 arrive à spires jointives avant que la butée de choc ne rencontre le corps d'amortisseur. Le ressort, heurté de façon répété par la coupelle inférieure 1 subit de nombreuses contraintes qui le détériore.

Une solution connue, visible à la figure 2, visant à annuler la détérioration du ressort, consiste à modifier la structure de la coupelle inférieure 1 de sorte qu'elle comprenne une face servant d'appui de butée de choc 5.

Toutefois, cette architecture n'est pas compatible avec un système de suspension et d'amortissement adapté pour le réglage de garde au sol offrant une position basse du châssis : pour que le châssis puisse être déplacé vers une position basse, un jeu entre l'appui de butée de choc et la partie supérieure du corps d'amortisseur est nécessaire lorsque le système est en position intermédiaire. L'architecture du système doit alors être modifiée afin de raccourcir l'amortisseur.

Dans le cas où la jambe de force du système de suspension et d'amortissement est fabriquée en cote critique, c'est-à-dire la plus courte possible, il n'est plus possible de la raccourcir. La course au choc est alors réduite, ce qui est inacceptable.

En revanche, si la jambe de force n'est pas réalisée en cote critique, la jambe de force peut être raccourcie. Toutefois, cela implique qu'en position basse, la course au choc est augmentée, et cela autorise un débattement de la roue au-delà de la position choc maximum, ce qui n'est pas possible en termes d'architecture.

Une telle solution n'est donc pas adaptable à tout type de système de suspension et d'amortissement à correction d'assiette.

Le document US2009146385 montre une suspension connue munie d'un système de réglage en hauteur. à

La présente invention concerne un système de suspension et d'amortissement configuré offrant la possibilité d'un réglage de garde au sol visant à préserver le ressort de sa détérioration prématurée et dont l'architecture est compatible avec une position basse du châssis.

Il est donc proposé un système de suspension et d'amortissement adapté pour le réglage de garde au sol d'un véhicule automobile, configuré pour autoriser au moins une position haute, au moins une position basse et une position intermédiaire du châssis par rapport au sol, le système comprenant un amortisseur et un ressort disposés sur un même axe, l'amortisseur comprenant une tige de piston apte à coulisser le long d'un corps d'amortisseur monté sur un porte-fusée relié à une roue du véhicule, le ressort étant monté entre une coupelle supérieure disposée côté châssis du véhicule et une coupelle inférieure mobile disposée côté roue du véhicule.

En outre, le système comprend un élément d'appui de butée de choc mobile par rapport à la coupelle inférieure, l'élément d'appui de butée de choc étant apte à venir en appui contre une butée de suspension disposée entre la coupelle supérieure et l'élément d'appui de butée de choc, l'élément d'appui de butée de choc étant configuré pour venir en contact avec le corps d'amortisseur ou un élément solidaire du corps d'amortisseur en position basse, l'élément d'appui de butée de choc étant configuré pour venir en contact avec la partie supérieure de la coupelle inférieure en position haute.

Avantageusement, le système peut être configuré pour autoriser une pluralité de positions hautes et une pluralité de positions basses.

On pourra prévoir que la coupelle inférieure soit raccordée à un vérin et qu'une bague d'entraînement soit disposée entre le corps d'amortisseur et la coupelle inférieure, l'ensemble bague d'entraînement et vérin étant destiné à assurer le déplacement de la coupelle inférieure par rapport au corps d'amortisseur entre position intermédiaire, positions hautes et positions basses.

De manière avantageuse, l'élément d'appui de butée de choc peut être disposé autour de la tige du piston ou du corps d'amortisseur de sorte que l'élément d'appui de butée de choc est apte à coulisser le long dudit corps d'amortisseur ou de la tige du piston.

Avantageusement, l'élément solidaire du corps d'amortisseur correspond à la bague d'entraînement.

De préférence, la coupelle inférieure est apte à déplacer l'élément d'appui de butée de choc en direction du châssis.

On pourra prévoir que l'ajustement entre positions hautes, basses et intermédiaire soit un ajustement continu.

Selon une variante, l'ajustement entre positions hautes, basses et intermédiaire peut être un ajustement par pas, à l'inverse d'un système de correction d'assiette dont l'ajustement est réalisé en continu.

L'invention concerne également un véhicule automobile comprenant un système de suspension et d'amortissement comme précédemment décrit.

D'autres buts, avantages et caractéristiques ressortiront de la description qui va suivre, donnée à titre d'exemple purement illustratif et faite en référence aux dessins annexés sur lesquels :
- La figure 1 est une vue en coupe d'un système de suspension et d'amortissement adapté au réglage de garde au sol selon un premier art antérieur ;
- La figure 2 est une vue en coupe d'un système de suspension et d'amortissement adapté au réglage de garde au sol selon un deuxième art antérieur ;
- La figure 3 illustre une vue en coupe d'un système de suspension et d'amortissement adapté au réglage de garde au sol selon l'invention, en position intermédiaire ;
- La figure 4 illustre une vue en coupe du système de suspension et d'amortissement adapté au réglage de garde au sol selon la figure 3, dans une position haute ; et
- La figure 5 est une vue en coupe du système de suspension et d'amortissement adapté au réglage de garde au sol illustré à la figure 3, dans une position basse.

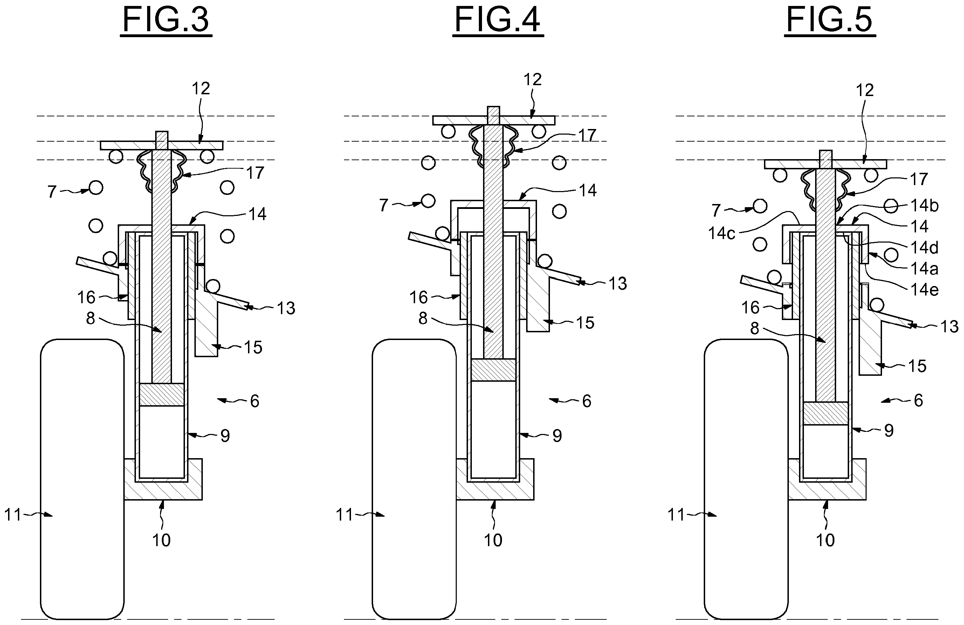

Les figures 3 à 5 illustrent un système de suspension et d'amortissement pour véhicule automobile adapté au réglage de garde au sol et configuré pour autoriser une position intermédiaire, des positions hautes et des positions basses du châssis par rapport au sol. Le système comprend un amortisseur 6 et un ressort 7 disposés sur un même axe.

L'amortisseur 6 comprend une tige de piston 8 apte à coulisser le long d'un corps d'amortisseur 9 monté sur un porte-fusée 10 relié à une roue 11 du véhicule.

Le ressort 7 est monté entre une coupelle supérieure ou attache supérieure 12 disposée côté châssis du véhicule et une coupelle inférieure 13 mobile disposée côté roue du véhicule.

En outre, le système de suspension et d'amortissement comprend un élément d'appui de butée de choc 14 indépendant et mobile par rapport à la coupelle inférieure 13. L'élément d'appui de butée de choc 14 est disposé autour de la tige de piston 8 ou autour du corps d'amortisseur de sorte que l'élément d'appui de butée de choc 14 est apte à coulisser le long du corps d'amortisseur 9. Comme illustré, l'élément d'appui de butée de choc 14 comprend, de préférence, une paroi cylindrique 14a, une base 14b comportant deux faces 14c et 14d opposées, et une extrémité circulaire 14e, visibles à la figure 5.

Dans l'exemple illustré, la coupelle inférieure 13 est raccordée à un vérin 15. Celui-ci peut être électrique ou hydraulique. De plus, une bague d'entraînement 16 de la coupelle inférieure est avantageusement disposée entre le corps d'amortisseur 9 et la coupelle inférieure 13. La bague d'entraînement 16 est, dans l'exemple illustré, solidaire du corps de l'amortisseur 9. L'ensemble bague d'entraînement 16 et vérin 15 assure le déplacement de la coupelle inférieure 13 par rapport au corps d'amortisseur 9 selon différents pas, c'est-à-dire vers les positions intermédiaire, hautes et basses, illustrées respectivement aux figures 3, 4 et 5.

Dans la position intermédiaire du châssis, illustrée à la figure 3, la coupelle inférieure 13 est disposée sur la position intermédiaire de la bague d'entraînement 16, de sorte que la face 14d de l'élément d'appui de butée de choc 14 est posée en appui sur la portion supérieure du corps d'amortisseur 9. La face opposée 14c est disposée en regard d'une butée de suspension 17 elle-même fixée à la coupelle supérieure 12 et disposée entre la coupelle supérieure 12 et l'élément d'appui de butée de choc 14. La coupelle inférieure 13 est disposée sur la position intermédiaire de la bague d'entraînement 16.

De manière avantageuse, dans la position intermédiaire, l'élément d'appui de butée de choc 14 et la coupelle inférieure 13 sont à peine en contact. Dans l'exemple illustré, la coupelle inférieure 13 est à peine en contact avec l'extrémité 14e de l'élément d'appui de butée de choc 14.

Dans une position haute du châssis, illustrée à la figure 4, la coupelle inférieure 13 est disposée sur une position haute de la bague d'entraînement 16, de sorte qu'un jeu réside entre la face 14d de l'élément d'appui de butée de choc 14 et la portion supérieure du corps d'amortisseur 9. L'élément d'appui de butée de choc 14 repose sur la portion supérieure de la coupelle inférieure 13. La coupelle inférieure 13 soutient l'élément d'appui de butée de choc 14 de sorte que l'élément d'appui de butée de choc 14 repose sur la portion supérieure de la coupelle inférieure 13. Plus précisément, dans l'exemple illustré, l'extrémité 14e repose sur la portion supérieure de la coupelle inférieure 13.

Dans une position basse du châssis, illustrée à la figure 5, la coupelle inférieure 13, indépendante de l'élément d'appui de butée de choc 14 est disposée sur une position basse de la bague d'entraînement 16, de sorte que l'élément d'appui de butée de choc 14 repose sur la portion supérieure du corps d'amortisseur 9 ou sur le dessus de la bague 16. La face 14d est posée en appui contre la portion supérieure du corps d'amortisseur 9. L'élément d'appui de butée de choc 14 est configuré pour ne pas être en contact avec la coupelle inférieure en position basse. Dans l'exemple illustré, l'extrémité 14e de l'élément d'appui de butée de choc n'est pas en contact de la coupelle inférieure 13.

Lors du passage de la coupelle inférieure 13 de la position intermédiaire vers une position haute de la bague d'entraînement 16, la coupelle inférieure 13 déplace et soulève l'élément d'appui de butée de choc en direction du châssis.

Lors du passage de la coupelle inférieure 13 de la position intermédiaire vers une position basse de la bague d'entraînement 16, le corps d'amortisseur ou le dessus de la bague 16 entraîne l'élément d'appui de butée de choc 14 et la coupelle inférieure 13 se dégage de l'élément d'appui de butée de choc 14.

Lors d'une course au choc, l'élément d'appui de butée de choc 14 est configuré pour venir en appui contre la butée de suspension 17. Le ressort 7, dans un état de compression limite prédéterminé en fonction de la hauteur de l'élément d'appui de butée de choc 14 ne rencontre ainsi plus de défaut de jeu entre ses spires.

En variante, on pourra prévoir que l'ajustement de position du châssis par rapport au sol soit réalisé en continu, à l'inverse d'un ajustement par pas tel qu'illustré.

De cette manière, l'architecture du système de suspension et d'amortissement est compatible avec une position basse du châssis tout en préservant l'intégrité du ressort. En outre, le système de suspension et d'amortissement peut être utilisé sur un véhicule ne comprenant pas de dispositif de réglage de garde au sol, sans nécessité de modifier l'architecture du système.

## Revendications

1. Système de suspension et d'amortissement adapté pour le réglage de garde au sol d'un véhicule automobile, configuré pour autoriser au moins une position haute, au moins une position basse et une position intermédiaire, du châssis par rapport au sol, le système comprenant un amortisseur (6) et un ressort (7) disposés sur un même axe, l'amortisseur (6) comprenant une tige de piston (8) apte à coulisser le long d'un corps d'amortisseur (9) monté sur un porte-fusée (10) relié à une roue (11) du véhicule, le ressort (7) étant monté entre une coupelle supérieure (12) disposée côté châssis du véhicule et une coupelle inférieure (13) mobile disposée côté roue (11) du véhicule, **caractérisé en ce qu'**il comprend un élément d'appui de butée de choc (14) mobile par rapport à la coupelle inférieure (13), l'élément d'appui de butée de choc (14) étant apte à venir en appui contre une butée de suspension (17) disposée entre la coupelle supérieure (12) et l'élément d'appui de butée de choc (14), l'élément d'appui de butée de choc (14) étant configuré pour venir en contact avec le corps d'amortisseur (9) ou un élément solidaire du corps d'amortisseur (16) en position basse, et configuré pour venir en contact avec la partie supérieure de la coupelle inférieure (13) en position haute.

2. Système de suspension et d'amortissement selon la revendication 1, **caractérisé en ce qu'**il est configuré pour autoriser une pluralité de positions hautes et une pluralité de positions basses.

3. Système de suspension et d'amortissement selon la revendication 1 ou 2, **caractérisé en ce que** la coupelle inférieure (13) est raccordé à un vérin (15) et une bague d'entraînement (16) est disposée entre le corps d'amortisseur (9) et la coupelle inférieure (13), l'ensemble bague d'entraînement (16) et vérin (15) étant destiné à assurer le déplacement de la coupelle inférieure (13) par rapport au corps d'amortisseur (9) entre positions intermédiaire, hautes et basses.

4. Système de suspension et d'amortissement selon l'une des revendications précédentes, **caractérisé en ce que** l'élément d'appui de butée de choc (14) est disposé autour de la tige du piston (8) ou du corps d'amortisseur (9) de sorte que l'élément d'appui de butée de choc (14) est apte à coulisser le long dudit corps d'amortisseur (9) ou de la tige du piston (8).

5. Système de suspension et d'amortissement selon la revendication 3, **caractérisé en ce que** l'élément solidaire du corps d'amortisseur (9) correspond à la bague d'entraînement (16).

6. Système de suspension et d'amortissement selon l'une des revendications précédentes, **caractérisé en ce que** la coupelle inférieure (13) est apte à déplacer l'élément d'appui de butée de choc (14) en direction du châssis.

7. Système de suspension et d'amortissement selon l'une des revendications précédentes, **caractérisé en ce que** l'ajustement entre positions hautes, basses et intermédiaire est un ajustement continu.

8. Système de suspension et d'amortissement selon l'une quelconque des revendications 1 à 6, **caractérisé en ce que** l'ajustement entre positions hautes, basses et intermédiaire est un ajustement par pas.

9. Véhicule automobile comprenant un système de suspension et d'amortissement selon l'une quelconque des revendications 1 à 8.

## Patentansprüche

1. Aufhängungs- und Dämpfungssystem zur Einstellung der Bodenfreiheit eines Kraftfahrzeugs, das konfiguriert ist, um zumindest eine hohe Position, zumindest eine tiefe Position und eine Zwischenposition des Fahrgestells in Bezug auf den Boden zu ermöglichen, wobei das System einen Stoßdämpfer (6) und eine Feder (7) umfasst, die auf derselben Achse angeordnet sind, wobei der Stoßdämpfer (6) eine Kolbenstange (8) umfasst, die an einem Stoßdämpferkörper (9) entlanggleiten kann, der an einem mit einem Rad (11) des Fahrzeugs verbundenen Achsschenkel (10) montiert ist, wobei die Feder (7) zwischen einer auf der Fahrgestellseite des Fahrzeugs montierten oberen Schale (12) und einer auf der Seite des Rads (11) des Fahrzeugs angeordneten unteren Schale (13) montiert ist, **dadurch gekennzeichnet, dass** es ein in Bezug auf die untere Schale (13) bewegliches Stoßanschlag-Abstützelement (14) umfasst, wobei das Stoßanschlag-Abstützelement (14) in der Lage ist, sich gegen einen zwischen der oberen Schale (12) und dem Stoßanschlag-Abstützelement (14) angeordneten Aufhängungsanschlag (17) abzustützen, wobei das Stoßanschlag-Abstützelement (14) so konfiguriert ist, dass es in der tiefen Position mit dem Stoßdämpferkörper (9) oder einem fest mit dem Stoßdämpferkörper (16) verbundenen Element in Kontakt kommt, und so konfiguriert ist, dass es in der hohen Position mit dem oberen Teil der unteren Schale (13) in Kontakt kommt.

2. Aufhängungs- und Dämpfungssystem nach Anspruch 1, **dadurch gekennzeichnet, dass** es konfiguriert ist, um mehrere hohe Positionen und mehrere tiefe Positionen zuzulassen.

3. Aufhängungs- und Dämpfungssystem nach Anspruch 1 oder 2, **dadurch gekennzeichnet, dass** die untere Schale (13) mit einem Zylinder (15) verbunden ist und zwischen dem Stoßdämpferkörper (9) und der unteren Schale (13) ein Antriebsring (16) angeordnet ist, wobei die Baugruppe aus Antriebsring (16) und Zylinder (15) dazu bestimmt ist, die Bewegung der unteren Schale (13) in Bezug auf den Stoßdämpferkörper (9) zwischen Zwischenposition, hohen und tiefen Positionen zu gewährleisten.

4. Aufhängungs- und Dämpfungssystem nach einem der vorangehenden Ansprüche, **dadurch gekennzeichnet, dass** das Stoßanschlag-Abstützelement (14) um die Kolbenstange (8) oder den Stoßdämpferkörper (9) herum angeordnet ist, sodass das Stoßanschlag-Abstützelement (14) in der Lage ist, am Stoßdämpferkörper (9) oder an der Kolbenstange (8) entlangzugleiten.

5. Aufhängungs- und Dämpfungssystem nach Anspruch 3, **dadurch gekennzeichnet, dass** das fest mit dem Stoßdämpferkörper (9) verbundene Element dem Antriebsring (16) entspricht.

6. Aufhängungs- und Dämpfungssystem nach einem der vorangehenden Ansprüche, **dadurch gekennzeichnet, dass** die untere Schale (13) in der Lage ist, das Stoßanschlag-Abstützelement (14) in Richtung des Fahrgestells zu bewegen.

7. Aufhängungs- und Dämpfungssystem nach einem der vorangehenden Ansprüche, **dadurch gekennzeichnet, dass** die Einstellung zwischen hohen, tiefen und Zwischenpositionen eine kontinuierliche Einstellung ist.

8. Aufhängungs- und Dämpfungssystem nach einem der Ansprüche 1 bis 6, **dadurch gekennzeichnet, dass** die Einstellung zwischen hohen, tiefen und Zwischenpositionen eine stufenweise Einstellung ist.

9. Kraftfahrzeug, umfassend ein Aufhängungs- und Dämpfungssystem nach einem der Ansprüche 1 bis 8.

## Claims

1. Suspension and damping system suitable for controlling the ground clearance of a motor vehicle, configured to allow at least one high position, at least one low position and an intermediate position, of the chassis relative to the ground, the system comprising a damper (6) and a spring (7) arranged on a same axis, the damper (6) comprising a piston rod (8) suitable for sliding along a damper body (9) mounted on a stub axle (10) linked to a wheel (11) of the vehicle, the spring (7) being mounted between a top spring retainer (12) arranged on the vehicle chassis side and a movable bottom spring retainer (13) arranged on the vehicle wheel (11) side, **characterized in that** it comprises a bump stop bearing element (14) that is movable relative to the bottom spring retainer (13), the bump stop bearing element (14) being capable of coming to bear against a suspension stop (17) arranged between the top spring retainer (12) and the bump stop bearing element (14), the bump stop bearing element (14) being configured to come into contact with the damper body (9) or an element secured to the damper body (16) in the low position, and configured to come into contact with the top part of the bottom spring retainer (13) in the high position.

2. Suspension and damping system according to Claim 1, **characterized in that** it is configured to permit a plurality of high positions and a plurality of low positions.

3. Suspension and damping system according to Claim 1 or 2, **characterized in that** the bottom spring retainer (13) is connected to an actuator (15) and a drive ring (16) is arranged between the damper body (9) and the bottom spring retainer (13), the drive ring (16) and actuator (15) assembly being designed to ensure the displacement of the bottom spring retainer (13) relative to the damper body (9) between intermediate, high and low positions.

4. Suspension and damping system according to one of the preceding claims, **characterized in that** the bump stop bearing element (14) is arranged about the piston rod (8) or the damper body (9) such that the bump stop bearing element (14) is capable of sliding along said damper body (9) or the piston rod (8).

5. Suspension and damping system according to Claim 3, **characterized in that** the element secured to the damper body (9) corresponds to the drive ring (16).

6. Suspension and damping system according to one of the preceding claims, **characterized in that** the bottom spring retainer (13) is capable of displacing the bump stop bearing element (14) in the direction of the chassis.

7. Suspension and damping system according to one of the preceding claims, **characterized in that** the adjustment between high, low and intermediate positions is a continuous adjustment.

8. Suspension and damping system according to any one of Claims 1 to 6, **characterized in that** the adjustment between high, low and intermediate positions is a stepped adjustment.

9. Motor vehicle comprising a suspension and damping system according to any one of Claims 1 to 8.
